# EUROPÄISCHE PATENTSCHRIFT

(11) **EP 1 429 937 B1**
(45) Veröffentlichungstag und Bekanntmachung des Hinweises auf die Patenterteilung: **02.01.2008**
(21) Anmeldenummer: 02737826.4
(22) Anmeldetag: 26.04.2002
(51) Int. Cl.: B60L 5/00, H02J 5/00, B61B 3/02

(54) **ELEKTROHÄNGEBAHN MIT BERÜHRUNGSLOSER ENERGIE- UND DATENÜBERTRAGUNG**
TELPHER LINE WITH CONTACTLESS ENERGY AND DATA TRANSMISSION
TRANSPORTEUR AERIEN ELECTRIQUE AVEC TRANSMISSION SANS CONTACT D'ENERGIE ET DE DONNEES

(30) Priorität: 24.09.2001 DE 10147859
(43) Veröffentlichungstag der Anmeldung: 23.06.2004
(73) Patentinhaber: LJU Industrieelektronik GmbH, 14476 Gross Glienicke (DE)
(72) Erfinder: FUTSCHEK, Norbert, 14480 Potsdam (DE)
(74) Vertreter: Wablat, Wolfgang
(86) Internationale Anmeldenummer: PCT/DE2002/001578
(87) Internationale Veröffentlichungsnummer: WO 2003/026915

(56) Entgegenhaltungen:
- WO-A-01/02211
- WO-A-96/31381
- WO-A-98/57413

## Beschreibung

Die Erfindung betrifft eine Elektrohängebahn mit berührungsloser Energieübertragung zwischen einem längs einer Laufschiene für mobile Transporteinheiten im Abstand angeordneten Speiseleiter und einem induktiven Stromabnehmer an der Transporteinheit sowie mit berührungsloser Datenübertragung zwischen einer Zentralstation und einem an der Transporteinheit vorgesehenen Steuergerät.

Bei einem bekannten Elektrohängebahnsystem dieser Art wird der Rückleiter für den an eine Wechselstromquelle höherer Frequenz angeschlossenen Speiseleiter unmittelbar durch die Laufschiene für die mobilen, mit einem Antriebsaggregat und einem Steuergerät ausgerüsteten Transporteinheiten gebildet. Der Stromabnehmer ist ein den Speiseleiter U-förmig übergreifender Ferritkern mit auf diesen Schenkeln angeordneten, jedoch unterschiedlich ausgelegten Wicklungen zur Erzeugung unterschiedlich hoher Speisespannungen für den Antriebsteil bzw. den Steuerungsteil der mobilen Transporteinheit.

Der hier zunächst unterbreitere Vorschlag, den Speiseleiter auch zur Kommunikation mit den Transporteinheiten zu deren Programmierung und Fernbedienung von einer Zentralstation aus zu verwenden, ist jedoch praktisch nicht realisierbar, da aufgrund des hohen Stromes in der Speiseleitung und der entsprechend hohen Felddichte nur ein sehr kleiner frequenzmäßiger Störabstand besteht und zur Beseitigung der daraus resultierenden Probleme ein unvertretbar hoher elektrischer und elektronischer Aufwand erforderlich ist.

Zur berührungslosen Datenübertragung bei Elektrohängebahnen ist weiterhin die Anwendung der Infrarottechnik bekannt. Ein auf diese Art ausgebildetes Datenübertragungssystem ist jedoch räumlich begrenzt. Die Datenübertragung kann nur an bestimmten, örtlich voneinander getrennten Punkten erfolgen. Zwischenzeitlich sind die Transporteinheiten unkontrolliert und von außen nicht beeinflußbar. Andererseits ist eine Verringerung der Abstände zwischen den einzelnen Kommunikationspunkten mit einem hohen Aufwand verbunden.

Die darüber hinaus zur Datenübertragung bereits vorgeschlagene Anwendung der Funktechnik, bei der die einzelnen Transporteinheiten mit einem Funkmodul ausgestattet sind und ein Verbund von festen Funkstationen mit im Bahnverlauf sich überschneidenden Funkzellen gebildet ist, zwischen denen die mobilen Transportelemente übergeben werden, ist insofern nachteilig, als der Funkkontakt durch äußere Einflüsse beeinträchtigt werden und abreißen kann. Zum anderen erfordert die Übergabe von einer Funkstation zur anderen einen erheblichen informationstechnischen Aufwand.

Eine Elektrohängebahn gemäß der Stand der Technik ist im WO-A-0102211 bekannt. Dieses Dokument offenbart eine induktive Übertragung von Energie und Daten im Mittelfrequenzbereich.

Der Erfindung liegt die Aufgabe zugrunde, für eine Elektrohängebahn mit berührungsloser Energieübertragung entsprechend der eingangs angegebenen Art ein berührungsloses Datenkommunikationssystem zu entwickeln, das mit geringem Aufwand entlang des Transportweges eine ständige zentrale Erfassung von Informationen der mobilen Transporteinheiten sowie die Übertragung von Daten zur Einflußnahme auf den Betrieb der mobilen Transporteinheiten gewährleistet und des weiteren sicherstellt, daß die zur Zentrale gesendeten Informationen von allen mobilen Transporteinheiten gleichzeitig mitempfangen werden können.

Erfindungsgemäß wird die Aufgabe mit einem gemäß den Merkmalen des Patentanspruches 1 ausgebildeten induktiven Datenübertragungssystem für eine Elektrohängebahn gelöst.

Aus den Unteransprüchen ergeben sich weitere Merkmale und vorteilhafte Weiterbildungen der Erfindung.

Der Grundgedanke der Erfindung besteht ausgehend von einer induktiven Energieübertragung von einem entlang der Laufbahn geführten Speiseleiter zu den Stromverbrauchern der Transporteinheit darin, daß dem Speiseleiter im Abstand eine Datenübertragungsschleife zugeordnet ist, deren zueinander parallel angeordnete und genau in einer Feldlinie des Speiseleiters liegende Leiter galvanisch an eine Zentralstation angeschlossen und induktiv mit dem Steuergerät der Transporteinheit verbunden sind. Die berührungslose Verbindung mit der induktiven Datenübertragungsschleife erfolgt über ein auf der mobilen Transporteinheit angebrachtes Kommunikationsmodul, das jeweils einen in geringem, aber für die Bewegung der Transporteinheiten praktikablen Abstand parallel zur Datenübertragungsschleife angeordneten Sende- und Empfangsferritkern mit Sende- bzw. Empfangsspule aufweist. Die Daten werden im Mittelfrequenzbereich in zwei unterschiedlichen, festen Sinusfrequenzen, die jeweils einen digitalen Wert (0 bzw. 1) darstellen, übertragen.

Die geometrische Anordnung der Datenübertragungsschleife vor dem Speiseleiter in einer einzigen der von diesem erzeugten Feldlinien gewährleistet zunächst, daß die vom Speiseleiter induzierte Störspannung und deren Einfluß auf die induktive Datenübertragung gering ist. Durch die induktive Datenübertragung im Mittelfrequenzbereich in Form von zwei unterschiedlichen Sinusfrequenzen als digitale Datenfolgen sind mit der erfindungsgemäß als reine Induktionsschleife dienenden Datenübertragungsschleife, die nicht als Wellenleiter und auch nicht als Antenne mit elektromagnetischer Strahlung bei hohen Frequenzen genutzt wird, ein geringer Schaltungsaufwand, eine unkritische, praktikable Dimensionierung der Abschlußwiderstände der Datenübertragungsschleife und letztlich ein ausreichender Störabstand zwischen dem Energie- und dem Datenübertragungskanal gewährleistet. Die Abstände zwischen der Datenübertragungsschleife und den an der mobilen Transporteinheit angebrachten Sende- und Empfangsferritkernen sind mit 5-10 mm für den Betrieb einer Elektrohängebahn ausreichend groß.

In weiterer Ausbildung der Erfindung sind dem Sende- und Empfangsferritkern im Kommunikationsmodul ein Sende- und Empfangskoppler, ein Sende- und Empfangsteil und eine Verarbeitungseinheit zum Senden bzw. Empfangen sowie zum Erzeugen und Verarbeiten der Daten bzw. der digitalen Sinusfolgen in zwei unterschiedlichen Frequenzen zugeordnet. Derartige Sende- und Empfangskoppler sowie Sende-und Empfangsteile nebst Verarbeitungseinheit sind auch in einer zwischen die Datenübertragungsschleife und die Zentralstation geschalteten Übertragungsstation vorgesehen.

Bei der vorliegenden Elektrohängebahn mit berührungsloser Energie- und Datenübertragung entspricht der Kommunikationsweg genau dem Weg der mobilen Transporteinheiten. Das mit niedrigen Frequenzen betriebene induktive Datenübertragungssystem ist in der Lage, zu jeder Zeit und mit geringem Aufwand alle mobilen Transporteinheiten mit Daten zu versorgen und entsprechend zu beeinflussen bzw. die von diesen bereitgestellten Informationen über den Status der Transporteinheit, die Position oder gegenseitige Abstände zu erfassen und an die Zentralstation weiterzuleiten.

Die erfindungsgemäß ausgebildeten Transporteinheiten sind in der Lage, alle zur Übertragungsstation gesendeten Informationen gleichzeitig mitzuempfangen. Dadurch ist es möglich, ohne zusätzliche Peripheriegeräte eine richtungsunabhängige Antikollisionsfunktion der mobilen Transporteinheiten untereinander entlang des Transportweges durch entsprechende Programmabläufe innerhalb des jeweiligen Steuergerätes zu realisieren. Dieser so beschriebene lokale betriebsmäßige Kollisionsschutz der mobilen Transporteinheiten untereinander kann jederzeit den systembedingten Abstandanforderungen angepaßt werden und ist ein entscheidender Vorteil gegenüber allen bisher bekannten Verfahren entlang eines sich räumlich darstellenden Transportweges.

Ein Ausführungsbeispiel der Erfindung wird anhand der Zeichnung näher erläutert. Es zeigen:
- Fig. 1: eine schematische Darstellung einer Elektrohängebahn mit berührungsloser Datenkommunikation zwischen deren mobilen Transporteinheiten und einer Zentralstation über eine induktive Datenübertragungsschleife;
- Fig. 2: ein in eine mobile Transporteinheit integriertes induktives Kommunikationsmodul zur Datenübertragung zwischen einer Zentralstation und einer Transporteinheit über die Datenübertragungsschleife;
- Fig. 3: die Datenübertragungsschleife mit einer an diese angeschlossenen Übertragungsstation;
- Fig. 4: ein Blockschaltbild einer mobilen Transport-Einheit, und
- Fig. 5: eine perspektivische Ansicht eines mit der Laufschiene für die Transporteinheiten verbundenen Speiseleiterträgers, der mit einer aufsteckbaren Halterung für die Datenübertragungsschleife verbunden ist.

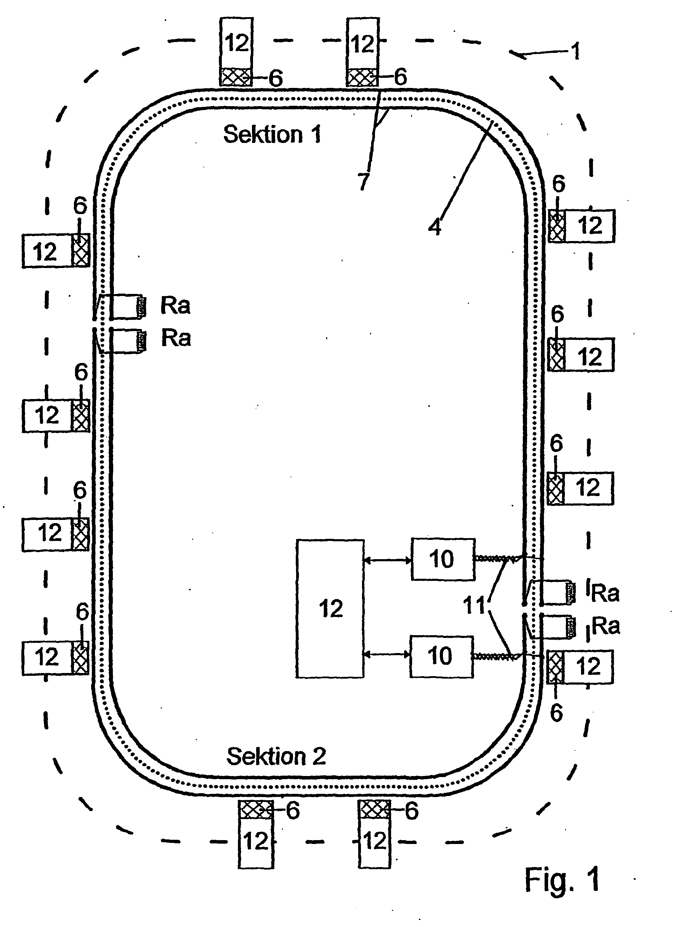

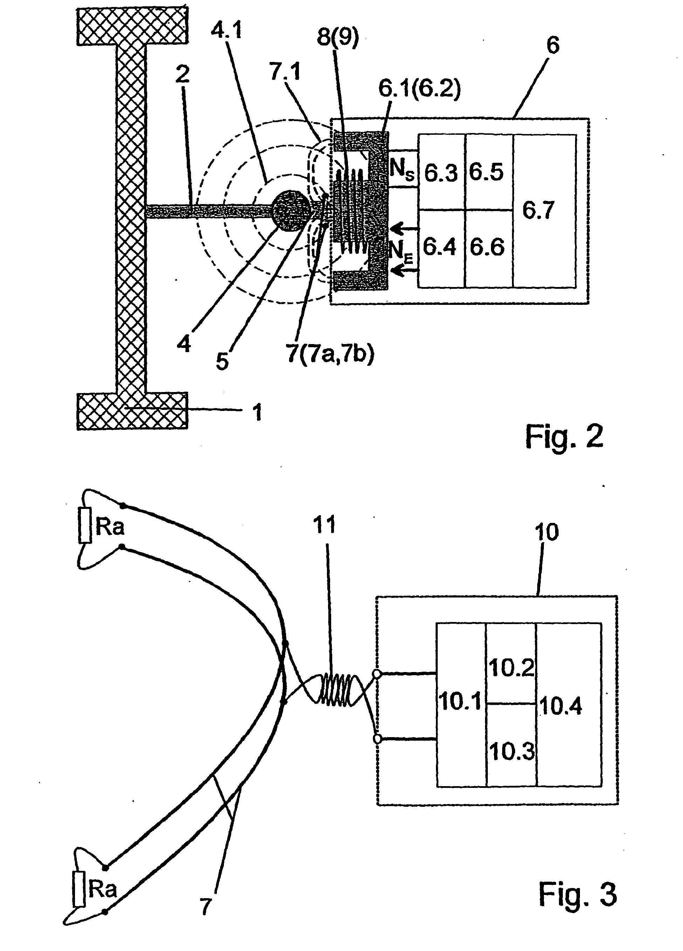

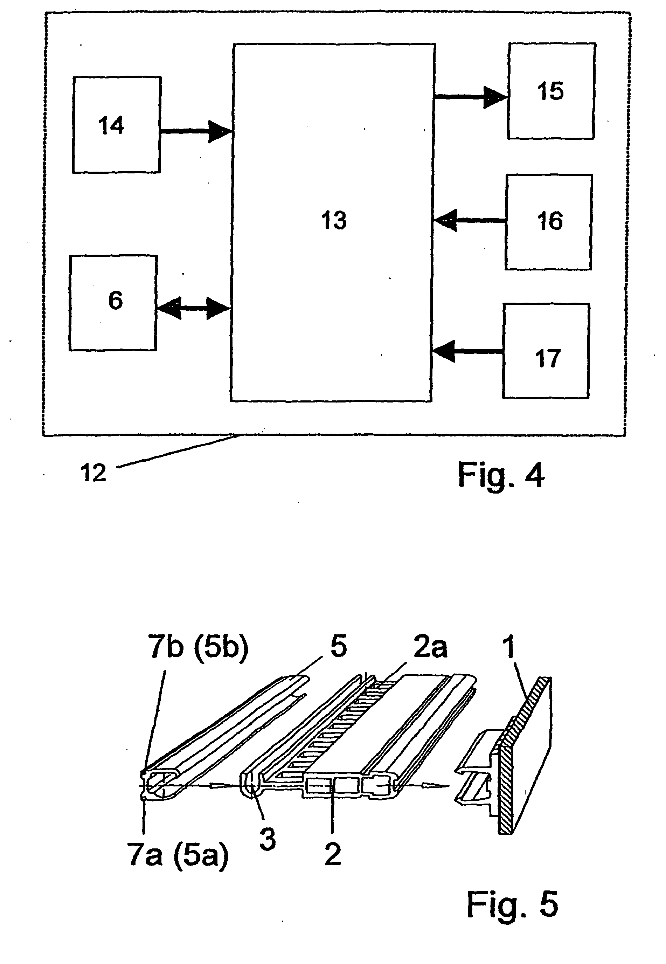

Die Figuren 1 bis 5 beziehen sich auf eine Elektrohängebahn mit berührungsloser, induktiver Energieübertragung von einem Speiseleiter zu einer Mehrzahl auf einer Laufschiene 1 verfahrbarer Transporteinheiten 12 zum Tragen und Transportieren von Lasten. Jede mobile Transporteinheit 12 ist mit einem Stromabnehmer 14 zur berührungslosen Energieübertragung von dem an eine Spannungsquelle angeschlossenen, als Hochfrequenzlitze ausgebildeten Speiseleiter 4 ausgerüstet. Der Speiseleiter 4 ist in der Halterinne 3 eines an der Laufschiene 1 angebrachten Speiseleiterträgers 2 aus nicht leitendem Material angeordnet. Wie aus Fig. 5 ersichtlich ist, weist der Speiseleiter 2 eine mechanische Codierung 2a auf, um mit einem an der Transporteinheit 12 vorgesehenen Positionsscanner 17 (Fig. 4) eine absolute Positionserfassung der Transporteinheit 12 sicherzustellen. Zur induktiven berührungslosen Energieübertragung ist der Stromabnehmer 14 als U-förmiger Ferritkern mit zwei Wicklungen und jeweils einer Abnehmerelektronik (jeweils nicht dargestellt) ausgebildet, um einerseits ein auf der Transporteinheit 12 angebrachtes Steuergerät 13 sowie die mit diesem verbundene Sensorik 16 und den Positionsscanner 17 mit der erforderlichen Steuerspannung zu versorgen und andererseits dem Antrieb 15 der Transporteinheit 12 die entsprechend größere Antriebsenergie zuzuführen.

Der Ferritkern (nicht dargestellt) umgibt den Speiseleiter 4 derart, daß die Energiemagnetfeldlinien 4.1 des Speiseleiters 4 die Ausbildung des magnetischen Flusses im Ferritkern für eine ausreichende magnetische Durchflutung sicherstellen.

Der Datensignalaustausch zwischen den auf der Laufschiene 1 geführten Transporteinheiten 12 und einer Zentralstation 18 erfolgt bei der oben beschriebenen Elektrohängebahn mit induktiver Energieübertragung berührungsfrei, und zwar ebenfalls auf induktivem Wege. Zu diesem Zweck ist zum einen im Abstand und parallel vor dem Speiseleiter 4 eine Datenübertragungsschleife 7 angeordnet, die aus zwei parallelen, in der Zeichnungsebene senkrecht übereinander angeordneten Drähten 7a, 7b besteht. Die beiden Drähte (Leiter) 7a, 7b sind an den jeweiligen Enden durch einen Abschlußwiderstand Rₐ verbunden. Die Datenübertragungsschleife 7 befindet sich dabei in einer geometrischen Lage entlang (d.h. innerhalb) einer Feldlinie 4.1 des Speiseleiters 4, so daß die von diesem Magnetfeld ausgehenden Störwirkungen auf die Datenübertragungsschleife 7 gering sind. Die geometrisch exakte Anordnung der Datenübertragungsschleife 7 entlang einer Feldlinie des Speiseleiters 4 wird mit Hilfe einer Halterinnen 5a, 5b aufweisenden Halterung 5 realisiert, an der die Drähte 7a, 7b parallel zueinander fixiert sind. Die Halterung 5 ist als Steckelement ausgebildet, das auf der Aufnahmerinne 3 für den Speiseleiter 4 verrastbar ist.

Gemäß Fig. 1 umfaßt das Elektrohängebahnsystem in der vorliegenden Ausführungsform zwei Sektionen (1 und 2) und demzufolge auch zwei Datenübertragungsschleifen 7 mit den zugehörigen Abschlußwiderständen Rₐ. Jede Datenübertragungsschleife 7 ist über Datenzuleitungen 11 galvanisch mit einer Übertragungsstation 10 verbunden, die jeweils an eine gemeinsame Zentralstation 18 angeschlossen ist. Die Übertragungsstation 10 umfaßt einen Sende- und Empfangskoppler 10.1 sowie ein Sendeteil 10.2 und ein Empfangsteil 10.3 zum Senden bzw. Empfangen von sinusförmigen Signalen im Mittelfrequenzbereich, und zwar in zwei unterschiedlichen Fixfrequenzen mit ausreichend hohem Störabstand, hier von 50 kHz und 125 kHz. Die jeweils sinusförmigen Signale als zwei Fixfrequenzen in zeitlicher Aufeinanderfolge stellen verschlüsselte digitale 0/1-Signale dar. Über eine an das Sende- und das Empfangsteil 10.2, 10.3 angeschlossene Verarbeitungseinheit 10.4 ist die jeweilige Übertragungsstation 10 mit der Zentralstation 18 verbunden.

Ein an jeder Transporteinheit 12 vorgesehenes induktives Kommunikationsmodul 6 umfaßt ebenfalls einen Sende-und einen Empfangskoppler 6.3 und 6.4 sowie ein Sendeteil 6.5 und ein Empfangsteil 6.6. zum Senden bzw. Empfangen von zwei sinusförmigen Signalen bzw. Signalfolgen mit unterschiedlicher Fixfrequenz im Mittelfrequenzbereich als digitale Datensignale und schließlich eine Verarbeitungseinheit 6.7, die mit dem Steuergerät 13 verbunden ist.

Die Datenübertragung, das heißt, das gegenseitige Senden und Empfangen der mit zwei Fixfrequenzen in Form sinusförmiger Signalfolgen vorliegenden Daten über die mit den Übertragungsstationen galvanisch verbundene Datenübertragungsschleife zu oder von dem auf den Transporteinheiten 12 angeordneten Kommunikationsmodul 6 erfolgt induktiv und damit berührungslos. Das Kommunikationsmodul 6 ist zu diesem Zweck mit zwei E-förmigen Ferritkernen versehen, von denen der Sendeferritkern 6.1 eine Sendespule 8 und der in der Zeichnungsebene dahinterliegende (nicht dargestellte) Empfangsferritkern 6.2 eine Empfangsspule 9 aufweist, um die den digitalen Impulsfolgen (0; 1) entsprechenden Sinuswellenfolgen unterschiedlicher Frequenz vom Steuergerät 13 über das Kommunikationsmodul 6 und die Datenübertragungsschleife 7 zur Übertragungsstation 10 und zur Zentralstation 18 zu senden oder in umgekehrter Richtung empfangen und über die Verarbeitungseinheit 6.7 an das Steuergerät 13, beispielsweise zur Steuerung des Antriebes 15, weiterzuleiten.

Die Erfindung ist selbstverständlich nicht auf die vorbeschriebene Ausführungsform beschränkt. Im Rahmen der erfindungswesentlichen Merkmale, die bei einer Elektrohängebahn mit berührungsloser (induktiver) Energieübertragung zu den Transporteinheiten darin bestehen, daß die Datenkommunikation zwischen den Transporteinheiten und einer Zentralstation mit Hilfe von zwei im Mittelfrequenzbereich liegenden Sinuswellenfolgen unterschiedlicher Frequenz über eine Datenübertragungsschleife mit beidseitigen Abschlußwiderständen und parallelen Drähten, die innerhalb einer Magnetfeldlinie des Speiseleiters für die induktive Energieübertragung liegen, unter Verwendung von mit einer Empfangs- bzw. Sendespule besetzten Ferritkernen ebenfalls induktiv erfolgt, sind fachgemäße Modifikationen zur Realisierung übergeordneter Funktionen, wie zum Beispiel Visualisierung, präventive Instandhaltung oder zentraler Auffahrschutz, denkbar.

### Bezugszeichenliste

- 1: Laufschiene
- 2: Speiseleiterträger
- 2a: mechanische Codierung
- 3: Halterinne für Speiseleiter
- 4: Speiseleiter
- 4.1: Feldlinien
- 5: Halterung
- 5a, 5b: Halterinnen für 7a, 7b
- 6: Induktives Kommunikationsmodul
- 6.1: Sendeferritkern
- 6.2: Empfangsferritkern
- 6.3: Sendekoppler
- 6.4: Empfangskoppler
- 6.5: Sendeteil
- 6.6: Empfangsteil
- 6.7: Verarbeitungseinheit
- 7: Datenübertragungsschleife
- 7a,7b: Drähteleiter von 7
- 7.1: Datenmagnetfeldlinien
- 8: Sendespule
- 9: Empfangsspule
- 10: Übertragungsstation
- 10.1: Sende- und Empfangskoppler
- 10.2: Sendeteil
- 10.3: Empfangsteil
- 10.4: Verarbeitungseinheit
- 11: Datenzuleitung
- 12: Mobile Transporteinheit
- 13: Steuergerät
- 14: Stromabnehmer
- 15: Antrieb
- 16: Sensorik
- 17: Positionsscanner
- 18: Zentralstation
- Rₐ: Abschlußwiderstand von 7

## Patentansprüche

1. Elektrohängebahn mit berührungsloser Energieübertragung zwischen einem längs einer Laufschiene für mobile Transporteinheiten im Abstand angeordneten Speiseleiter und einem induktiven Stromabnehmer an der Transporteinheit sowie mit berührungsloser Datenübertragung zwischen einer Zentralstation und einem an der Transporteinheit vorgesehenen Steuergerät, **dadurch gekennzeichnet, daß** in definiertem Abstand längs des Speiseleiters (4) eine Datenübertragungsschleife (7) mit beidseitigen Abschlußwiderständen (Rₐ) und zwei parallelen, in ein- und derselben Feldlinie (4.1) des Speiseleiters (4) liegenden Leitern (7a, 7b) angeordnet ist, die Datenübertragungsschleife (7) über eine Übertragungsstation (10) galvanisch an die Zentralstation (18) angeschlossen ist und über ein Kommunikationsmodul (6) induktiv mit dem Steuergerät (13) der Transporteinheit (12) verbunden ist; wobei das Kommunikationsmodul (6) im Abstand zur Datenübertragungsschleife (7) einen Sende- und einen Empfangsferritkern (6.1; 6.2) mit einer Sende- bzw. Empfangsspule (8, 9) zur induktiven Übertragung von in Form von Sinussignalfolgen in zwei unterschiedlichen Fixfrequenzen im Mittelfrequenzbereich erzeugten digitalen Signalen aufweist.

2. Elektrohängebahn nach Anspruch 1, **dadurch gekennzeichnet, daß** an einem den Speiseleiter (4) aufnehmenden Speiseleiterträger (2) eine Halterung (5) befestigbar ist, an der die beiden Leiter (7a,7b) der Datenübertragungsschleife (7) in Halterinnen (5a, 5b) parallel zueinander fixierbar sind.

3. Elektrohängebahn nach Anspruch 2, **dadurch gekennzeichnet, daß** die Halterung (5) als ein eine Halterinne (3) des Speiseleiterträgers (2) übergreifender Steckaufsatz ausgebildet ist.

4. Elektrohängebahn nach Anspruch 1, **dadurch gekennzeichnet, daß** der Sende- und der Empfangs-ferritkern (6.1, 6.2) E-förmig ausgebildet sind und deren jeweils mittlerer Steg, dessen Stirnseite der Datenübertragungsschleife (7) im Abstand parallel gegenübersteht, die Sendespule (8) bzw. die Empfangsspule (9) aufnimmt.

5. Elektrohängebahn nach Anspruch 1 und 4, **dadurch gekennzeichnet, daß** dem Sende- und Empfangsferritkern (6.1, 6.2) im Kommunikationsmodul (6) ein Sende- und ein Empfangskoppler (6.3, 6.4), ein Sende- und ein Empfangsteil (6.5; 6.6) und eine mit dem Steuergerät (13) verbundene Verarbeitungseinheit (6.7) zugeordnet sind.

6. Elektrohängebahn nach Anspruch 1, **dadurch gekennzeichnet, daß** die über eine Datenzuleitung (11) an die Datenübertragungsschleife (7) angeschlossene Übertragungsstation (10) einen Sende- und Empfangskoppler (10.1), ein Sende- und ein Empfangsteil (10.2; 10.3) sowie eine mit der Zentralstation verbundene Verarbeitungseinheit (10.4) aufweist.

7. Elektrohängebahn nach Anspruch 1, **dadurch gekennzeichnet, daß** die beiden unterschiedlichen Fixfrequenzen der induktiv übertragenen verschlüsselten digitalen Daten sinusförmige Signale mit ausreichend großem Störabstand sind.

8. Elektrohängebahn nach einem der Ansprüche 1 bis 7, **dadurch gekennzeichnet, daß** das Steuergerät (13) der mobilen Transporteinheit (12) an einen Antrieb (15), eine Sensorik (16) und einen Positionsscanner (17) angeschlossen ist.

9. Elektrohängebahn nach einem der Ansprüche 1 bis 8, **dadurch gekennzeichnet, daß** mehreren Hängebahnsektionen jeweils eine Datenübertragungsschleife (7) mit an diese angeschlossener Übertragungsstation (10) zugeordnet ist.

10. Elektrohängebahn nach einem der Ansprüche 1 bis 9, **dadurch gekennzeichnet, daß** die Eigenschaft der Transporteinheiten (12), alle Informationen auf der Datenübertragungsschleife (7) mitzuempfangen, für eine lokale richtungsunabhängige Kollisionsschutzfunktion aller mobilen Transporteinheiten nutzbar ist.

## Claims

1. An electric telpher with contactless energy transmission between a feeder arranged at a spacing along a slide rail for mobile transfer units and an inductive current collector on the transfer unit as well as with contactless data transmission between a central control station and a controller installed in the transfer unit, **characterized in that** a data transmission loop (7) with terminating resistors (Rₐ) on both ends and two parallel conductors (7a, 7b) that are located in one and the same field line (4.1) of the feeder (4) is arranged at a defined spacing along the feeder (4), **in that** said data transmission loop (7) is direct-coupled with a central control station (18) via a transmission station (10) and inductively connected with the controller (13) of the transfer unit (12) via a communication module (6); said communication module (6) comprising transmit and receive ferrite cores (6.1; 6.2) with a transmit or receive coil (8, 9), respectively, at a spacing to the data transmission loop (7) for inductive transmission of digital signals in the form of sinusoidal sequences at two different frequencies in the medium frequency range.

2. The electric telpher according to claim 1, **characterized in that** a holder (5) can be mounted to one of the feeder brackets (2) that hold the feeder (4) wherein the two conductors (7a, 7b) of the data transmission loop (7) can be attached in parallel to each other in holding ducts (5a, 5b).

3. The electric telpher according to claim 2, **characterized in that** the holder (5) is designed as a slip-on accessory bridging a holding duct (3) of the feeder bracket (2).

4. The electric telpher according to claim 1, **characterized in that** the transmit and receive ferrite cores (6.1, 6.2) have an E-shaped design and **in that** their respective center webs the front sides of which run in parallel and at a spacing to the data transmission loop (7), house either a transmit coil (8) or a receive coil (9).

5. The electric telpher according to claims 1 and 4, **characterized in that** a transmit and a receive coupler (6.3, 6.4), a transmit and a receive section (6.5; 6.6), and a processing unit (6.7) connected to the controller (13) are assigned to the transmit and receive ferrite cores (6.1, 6.2) in the communication module (6).

6. The electric telpher according to claim 1, **characterized in that** the transmission station (10) connected to the data transmission loop (7) via a data feed line (11) comprises a transmit and receive coupler (10.1), a transmit and a receive section (10.2; 10.3) as well as a processing unit (10.4) connected to the central control station.

7. The electric telpher according to claim 1, **characterized in that** the two different fixed frequencies of the coded digital data transmitted by induction are sinusoidal signals with a sufficiently great signal-to-noise ratio.

8. The electric telpher according to any one of claims 1 through 7, **characterized in that** the controller (13) of the mobile transfer unit (12) is connected to a drive unit (15), a sensing and control system (16), and a position scanner (17).

9. The electric telpher according to any one of claims 1 through 8, **characterized in that** each of multiple telpher sections is assigned to a data transmission loop (7) and a transmission station (10) connected to it.

10. The electric telpher according to any one of claims 1 through 9, **characterized in that** the capability of the transfer units (12) to receive all data transmitted on the data transmission loop (7) can be used for a local, direction-independent collision protection function of all mobile transfer units.

## Revendications

1. Transporteur aérien électrique avec transmission sans contact d'énergie entre un conducteur d'alimentation agencé à distance le long d'un rail de circulation pour des unités de transport mobiles et un récepteur de courant inductif sur l'unité de transport, ainsi qu'avec transmission sans contact de données entre une station centrale et un appareil de commande prévu sur l'unité de transport, **caractérisé en ce qu'**à une distance définie le long du conducteur d'alimentation (4) est agencée une boucle de transmission de données (7) présentant de part et d'autre des résistances de terminaison (Rₐ) et deux conducteurs parallèles (7a, 7b) situés dans une seule et même ligne de champ (4.1) du conducteur d'alimentation (4), **en ce que** la boucle de transmission de données (7) est branchée par voie galvanique à la station centrale (18) via une station de transmission (10) et est connectée par voie inductive à l'appareil de commande (13) de l'unité de transport (12) via un module de communication (6) ; le module de communication (6) présentant, à distance de la boucle de transmission de données (7), un noyau émetteur en ferrite et un noyau récepteur en ferrite (6.1 ; 6.2) munis respectivement d'une bobine émettrice et d'une bobine réceptrice (8, 9) pour la transmission inductive de signaux numériques générés sous forme de successions de signaux sinusoïdaux dans deux fréquences fixes différentes dans la plage de fréquence moyenne.

2. Transporteur électrique aérien selon la revendication 1, **caractérisé en ce qu'**une monture (5) est susceptible d'être fixée sur un support de conducteur d'alimentation (2) recevant le conducteur d'alimentation (4), monture sur laquelle peuvent être fixés parallèlement les deux conducteurs (7a, 7b) de la boucle de transmission de données (7) dans des rainures de retenue (5a, 5b).

3. Transporteur électrique aérien selon la revendication 2, **caractérisé en ce que** la monture (5) est réalisée sous la forme d'un élément enfichable coiffant une rainure de retenue (3) du support de conducteur d'alimentation (2).

4. Transporteur électrique aérien selon la revendication 1, **caractérisé en ce que** les noyaux émetteur et récepteur en ferrite (6.1, 6.2) sont réalisés en forme de E et **en ce que** leur âme centrale respective dont la face frontale est opposée parallèlement à distance à la boucle de transmission de données (7) reçoit la bobine émettrice (8) ou la bobine réceptrice (9).

5. Transporteur électrique aérien selon les revendications 1 et 4, **caractérisé en ce que** des coupleurs émetteur et récepteur (6.3, 6.4), des parties émettrice et réceptrice (6.5 ; 6.6) et une unité de traitement (6.7) connectée à l'appareil de commande (13) sont associés aux noyaux émetteur et récepteur en ferrite (6.1, 6.2) dans le module de communication (6).

6. Transporteur électrique aérien selon la revendication 1, **caractérisé en ce que** la station de transmission (10) connectée à la boucle de transmission de données (7) via une ligne d'acheminement de données (11) comprend un coupleur émetteur et récepteur (10.1), une partie émettrice et une partie réceptrice (10.2 ; 10.3) ainsi qu'une unité de traitement (10.4) connectée à la station centrale.

7. Transporteur électrique aérien selon la revendication 1, **caractérisé en ce que** les deux fréquences fixes différentes des données numériques codées transmises par voie inductive sont des signaux sinusoïdaux présentant un rapport signal/bruit suffisamment grand.

8. Transporteur électrique aérien selon l'une des revendications 1 à 7, **caractérisé en ce que** l'appareil de commande (13) de l'unité de transport mobile (12) est branché à un entraînement (15), à une unité sensorielle (16) et à un scanneur de position (17).

9. Transporteur électrique aérien selon l'une des revendications 1 à 8, **caractérisé en ce qu'**une boucle de transmission de données (7) respective avec une station de transmission (10) branchée à celle-ci est associée à chacune parmi plusieurs sections de transporteur aérien.

10. Transporteur électrique aérien selon l'une des revendications 1 à 9, **caractérisé en ce que** la propriété des unités de transport (12) de co-recevoir toutes les informations sur la boucle de transmission de données (7) est utilisable pour une fonction de protection anticollision locale, indépendante de la direction, de toutes les unités de transport mobiles.
